# EUROPÄISCHE PATENTSCHRIFT

(11) **EP 0 976 318 B1**
(45) Veröffentlichungstag und Bekanntmachung des Hinweises auf die Patenterteilung: **06.10.2004**
(21) Anmeldenummer: 99113126.9
(22) Anmeldetag: 07.07.1999
(51) Int. Cl.: A01D 78/10

(54) **Landwirtschaftliche Arbeitsmaschine**
Agricultural working machine
Machine de travail agricole

(30) Priorität: 27.07.1998 DE 19833588
(43) Veröffentlichungstag der Anmeldung: 02.02.2000
(73) Patentinhaber: CLAAS Saulgau GmbH, 88340 Bad Saulgau (DE)
(72) Erfinder: Deni, Franz, 88348 Saulgau (DE)

(56) Entgegenhaltungen:
- EP-A- 0 654 209
- DE-A- 4 301 084
- DE-U- 9 010 176
- DE-U- 29 622 222
- DE-U- 29 719 471

## Beschreibung

Die Erfindung betrifft eine landwirtschaftliche Arbeitsmaschine gemäß dem Oberbegriff des Patentanspruchs 1.

Die als Rechkreisel ausgeführten Arbeitsorgane derartiger landwirtschaftlicher Arbeitsmaschinen sind um vertikale Achsen umlaufend an Zwischenrahmen angeordnet, die gelenkig miteinander verbunden sind, sodaß sie um in Fahrtrichtung verlaufende Achsen relativ zueinander verschwenkt werden können. Die in Arbeitsstellung etwa senkrecht zur Fahrtrichtung angeordneten Rechkreisel können zudem in ihrer Stellung zum Trägerfahrzeug und damit zur Fahrtrichtung dadurch verändert werden, daß die Rechkreisel-tragenden Laufräder in ihrer Lage zur Rechkreiselachse verstellbar an dieser angeordnet sind und die landwirtschaftliche Arbeitsmaschine dadurch zur Bearbeitung der Randstreifen in ihrer Arbeitsbreite einstellbar ist.

In der europäischen Patentschrift EP 439 067 ist ein Verstellmechanismus für die Laufräder einer Heuwerbungsmaschine offenbart, bei dem die untenseitig mittels Laufrad am Boden abgestützte Rechkreiselachse an ihrem oberen unterhalb der Antriebswelle liegenden Ende einen Verstellhebel aufweist, der seitlich aus dem einteilig ausgeführten Antriebsgetriebe des Rechkreisels über eine Schlitzöffnung herausgeführt wird. Da der Verstellhebel die Schlitzöffnung nur teilweise verschließt, können Wasser, Staub und andere Verschmutzungen in das Getriebe gelangen und das Schmiermittel verunreinigen. Dies erhöht neben dem Verschleiß auch die Störanfälligkeit eines derart ausgeführten Getriebes. Zur Vermeidung solcher verunreinigungsbedingten Defekte wird in dem deutschen Gebrauchsmuster DE 296 22 222 U1 eine Ausführung vorgeschlagen, die über geschlossene je einen Rechkreisel und ein Laufrad aufnehmende Getriebe verfügt, die untenseitig an den seitlich ausladenten Rahmenteilen einer Heuwerbungsmaschine so angeflanscht sind, daß sich zwischen Getriebe und Rahmenteil ein Spalt ergibt durch den jeweils ein an den oberen Enden der Laufrad-tragenden Kreiselachsen adaptierter Verstellhebel nach außen geführt wird. Auf diese Weise werden verunreinigungsbegünstigende Öffnungen in den kreislantreibenden Getrieben vermieden. Eine derartige Ausführung des Verstellmechanismus ist aber konstruktiv aufwendig, da die Rahmenteile im Bereich der Getriebe zur Aufnahme von Reaktionskräften einer zusätzlichen Versteifung bedürfen.

In der DE 4301084 ist ebenfalls ein Kreiselheumaschine der gattungsbildenden Art mit einer Laufradstellung beschrieben, bei der die Arbeitskreisel lösbar mit dem Befestigungsrahmen verbunden sind, wobei der Befestigungsrahmen in oberen Bereich glockenförmig ausgebildet ist. Dabei sind die Kreiselachse als Rohrhülsen ausgebildet sind, die im oberen Bereich als Trichter mit Befestigungspratzen ausgebildet sind, und die von außen in den glockenförmigen Teil des Maschinerahmen eingeführt und mit diesem an einer entsprechend ausgeformten Flanschfläche verschraubt werden können. Auf dem äußeren Rohrdurchmesser der Rohrhülsen, die somit als Tragzapfen und Kreiselachse fungieren, ist der Arbeitskreisel dreh- und antreibbar gelagert. Der innerer Rohrdurchmesser wird dabei von einer Stellwelle durchsetzt, die eine Winkelverstellung der Laufräder bewirken kann. Oberhalb des trichterförmigen Flansches der Rohrhülse erstreckt sich quer zur Kreiselachse verlaufend die Antriebswelle zum Antrieb der Arbeitskreisel, die mittels Antriebskegelräder eines Kegelradgetriebe angetrieben werden. Die Stellwelle zur Winkelveränderung der Laufräder ist nach oben hin haken- oder ringförmig verlängert, so dass diese mit Abstand die Antriebswelle umgreifen kann. In der weiteren Verlängerung nach oben durchstößt die Stellvirelle in einer Lagerung drehbar das Maschinengestell, so dass sich
der Stellhebel zur Winkelverstellung der Laufräder oberhalb des Maschinenrahmens befindet. Diese Ausführungsform ist zwar gekennzeichnet durch eine besonders stabile Bauweise, die konstruktiv aufwendig und kostenintensiv ist, die aber insbesondere den Nachteil aufweist, dass die obere Lagerstelle des Stellhebels beim Durchdringen des Maschinengehäuses nicht öl- bzw. wasserdicht ausgebildet ist und somit auch nicht gegen eindringende Schmutzpartikel abgesichert ist.

Der Erfindung liegt deshalb die Aufgabe zugrunde, eine landwirtschaftliche Arbeitsmaschine gemäß dem Oberbegriff des Anspruchs 1 so zu gestalten, daß auf konstruktiv einfache Weise die Antriebsgetriebe der als Rechkreisel ausgeführten beitsorgane mit einer Laufradverstellung derart versehen sind, dass diese zu keiner Verschmutzung des Schmiermittels und damit verbunden zu einer verschmutzungsbedingten Beschädigung der einzelnen Bauelemente der Getriebe führt.
Erfindungsgemäß wird die Aufgabe durch eine landwirtschaftliche Arbeitsmaschine mit den kennzeichnenden Merkmalen des Anspruchs 1 gelöst.

Aufgrund dessen, daß die horizontal und vertikal verlaufenden Wände des Getriebes und wenigstens ein ihnen zugeordnetes Abdichtelement das Getriebe in zwei zueinander öldichte Bereiche unterteilt, kann der Verstellhebel durch eine seitliche Schlitzöffnung aus dem nicht die Antriebselemente und das Schmiermittel aufnehmenden Bereich des Getriebes nach außen geführt werden ohne daß dadurch verschmutzungsbedingter Verschleiß an den Antriebselementen auftritt.

In vorteilhafter Weise umfaßt das Getriebe vertikal verlaufende Flanschflächen durch die das Getriebe auf konstruktiv einfache Weise zwischen den Seitenrahmen der landwirtschaftlichen Arbeitsmaschine anbringbar ist, wobei eine zusätzliche Versteifung der Endbereiche der Seitenrahmen nicht erforderlich ist.

Zur einfacheren Handhabung des Verstellmechanismus ist außerdem vorgesehen, die Verstellhebel der die Laufräder aufnehmenden Kreiselachsen durch einen Koppelmechanismus miteinander zu verbinden.

Vorteilhafte Ausgestaltungen sind Gegenstand weiterer Unteransprüche und werden nachfolgend anhand eines in Zeichnungen dargestellten Ausführungsbeispiels näher erläutert.

Es zeigen
- Figur 1: eine Heuwerbungsmaschine mit Trägerfahrzeug in nicht ausgelenkter Arbeitsstellung in Ansicht von oben

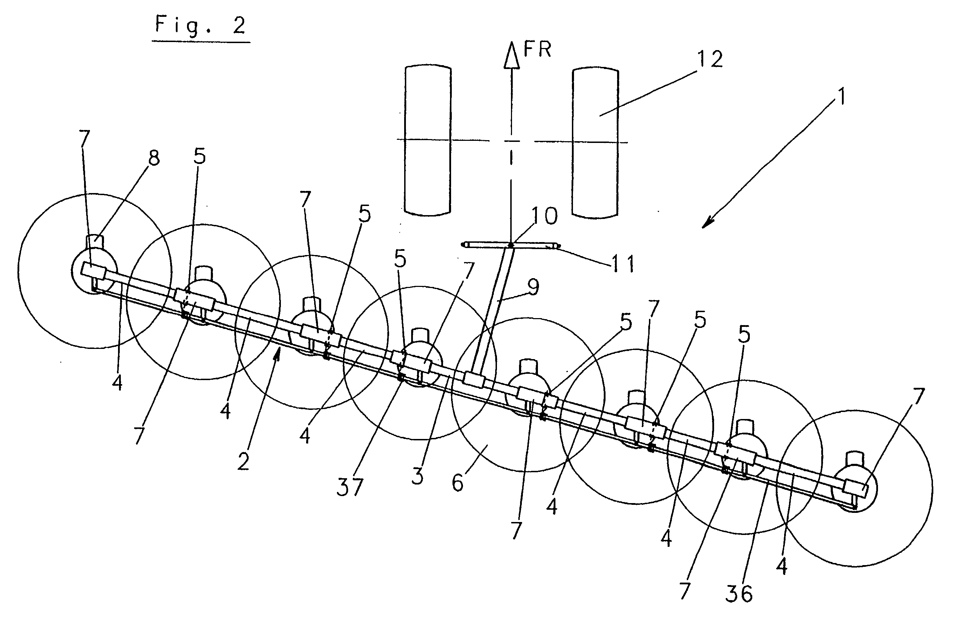

- Figur 2: eine Heuwerbungsmaschine mit Trägerfahrzeug in ausgelenkter Arbeitsstellung in Ansicht von oben

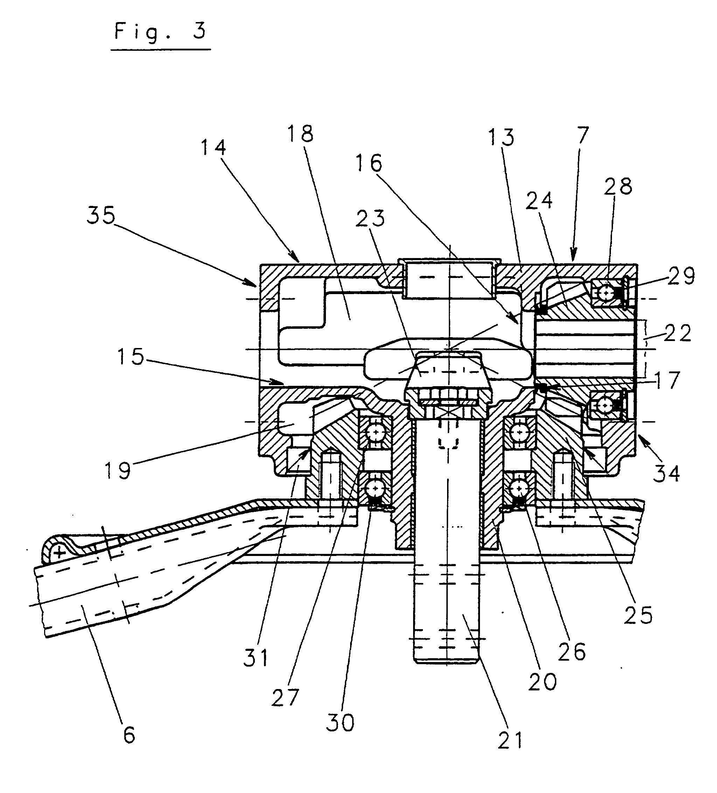

- Figur 3: eine Schnittdarstellung des Getriebes mit erfindungsgemäßer Laufradverstellung

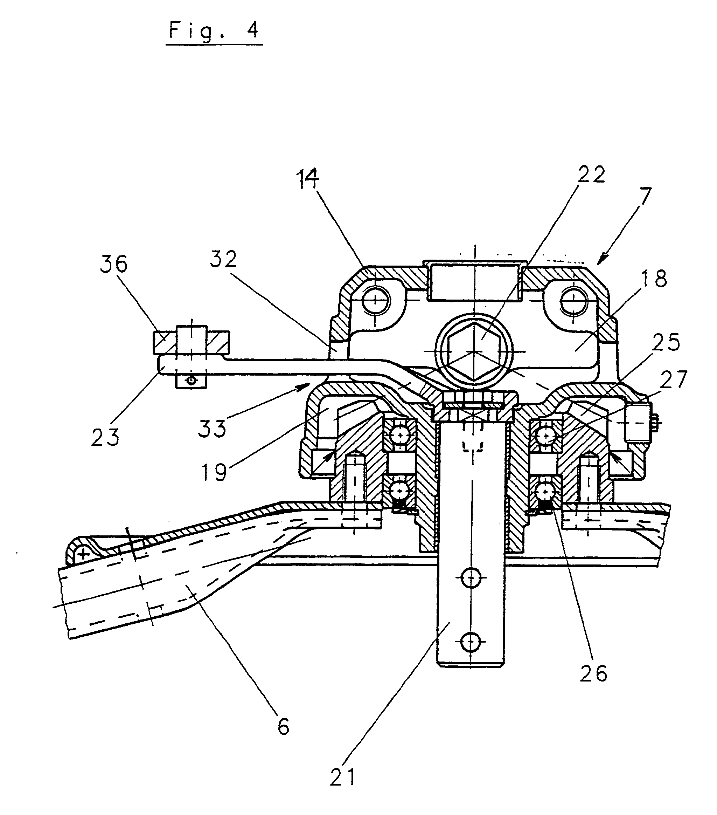

- Figur 4: eine weitere Schnittdarstellung des Getriebes mit erfindungsgemäßer Laufradverstellung
- Figur 5: das Getriebe mit erfindungsgemäßer Laufradverstellung in Ansicht von oben

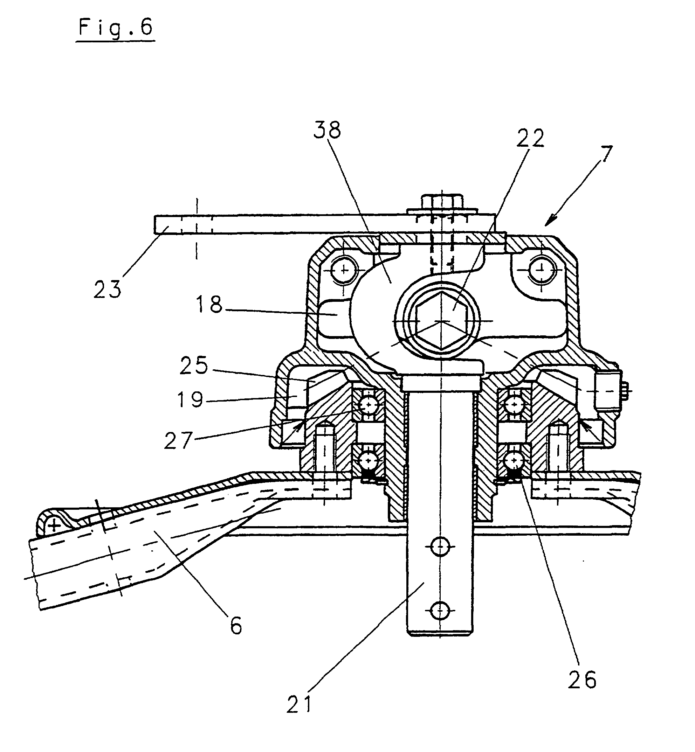

- Figur 6: eine weitere Schnittdarstellung des Getriebes mit obenseitige aus dem Getriebe geführten Verstellhebel.

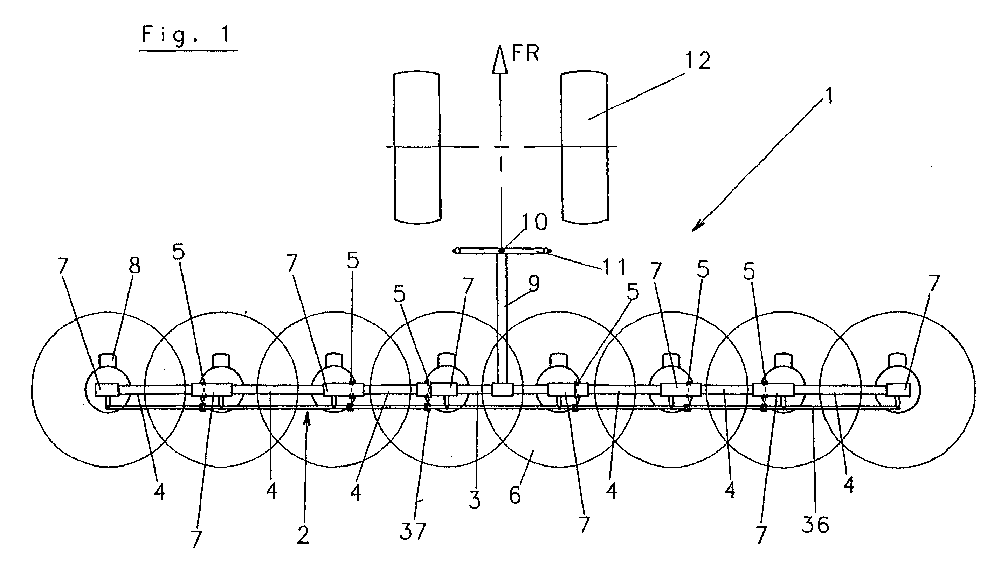

In Figur 1 ist eine als Heuwerbungsmaschine 1 ausgeführte landwirtschaftliche Arbeitsmaschine mit erfindungsgemäßem Verstellmechanismus 2 dargestellt. Die Heuwerbungsmaschine 1 verfügt über ein Rahmenmittelteil 3, dem seitlich ausladend um in Fahrtrichtung FR verlaufende Achsen 5 schwenkbare Seitenrahmen 4 zugeordnet sind, die zwischen sich die als Rechkreisel 6 ausgeführten Arbeitsorgane antreibenden Getriebe 7 aufnehmen. Jedem Rechkreisel 6 ist untenseitig ein Laufrad 8 zugeordnet, welches den jeweiligen Rechkreisel 6 auf dem Boden abstützt. Das Rahmenmittelteil 3 ist an einem Längsträger 9 fixiert, der an seinem trägerfahrzeugseitigen Ende um eine vertikale Achse 10 verschwenkbar mit einer Aufsatteleinrichtung 11 verbunden ist, über die die Heuwerbungsmaschine 1 am Trägerfahrzeug 12 abgestützt wird. Jedes Getriebe 7 umfaßt einen Grundkörper 13, der erfindungsgemäß horizontal und vertikal verlaufende Wände 15, 16 und eine deckelförmig ausgebildete Wand 14 aufweist, die in Verbindung mit wenigstens einem im einfachsten Fall als V-Ring 17 ausgeführten Abdichtelement das Getriebe in einen oberen und einen unteren öldicht voneinander getrennten Bereich 18, 19 aufteilt. Die horizontale Wand 15 des unteren Bereichs 19 verfügt über eine halsförmige Verlängerung 20 die in ihrem Inneren von der Kreiselachse 21 durchsetzt wird, die untenseitig in aus dem Stand der Technik bekannter und deshalb nicht näher dargestellter Weise ein Laufrad 8 aufnimmt und obenseitig unterhalb der die Antriebsenergie zwischen den Getrieben 7 übertragenden Wellen 22 endet und in diesem Bereich mit dem erfindungsgemäßen Verstellhebel 23 lösbar verbunden ist. Der ringförmig ausgebildete untere Bereich 19 der Getriebe 7 umhüllt ein die Antriebsenergie von Welle 22 auf die Rechkreisel 6 übertragendes Kegelradpaar 24, 25 und deren Lagerstellen 26, 27, 28. Das Kegelrad 25 ist dabei so ausgeführt, daß der Rechkreisel 6 direkt an dessen Außenseite angeflanscht werden kann.

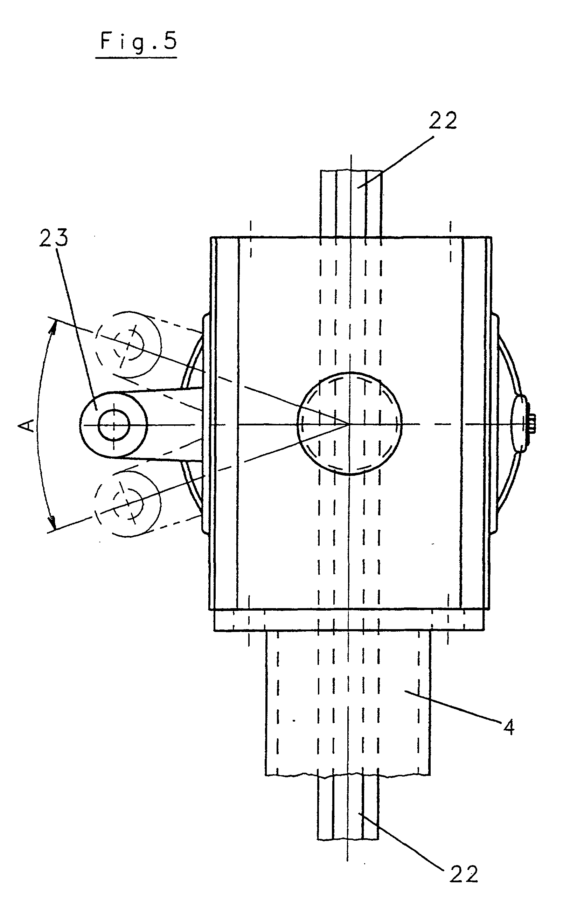

Der untere Bereich 19 wird nach außen durch Dichtelemente verschlossen, die im einfachsten Fall mit Dichtscheiben 29, 30 versehene Lager 26, 28 oder Wellendichtringe 31 sein können. Im Bereich der vertikalen Wand 16 wird der untere Bereich 19 gegen den oberen Bereich 18 durch ein als V-Ring 17 ausgeführtes Dichtelement öldicht verschlossen. Der von den Wänden 14, 15, 16 gebildete obere Bereich 18 der Getriebe 7 bildet somit ein Gehäuse, daß die energieübertragenden Wellen 22 im Bereich der Getriebe 7 aufnimmt und gleichzeitig öldicht gegen den unteren Bereich 19 abgegrenzt ist. Je nach Anordnung der Getriebe 7 zwischen den Seitenrahmen 4 verfügen die Getriebe 7 ein- oder beidseitig über vertikale Flanschflächen 34, 35, die ein einfaches Anflanschen der Getriebe 7 an den Seitenrahmen 4 ermöglichen, ohne das die Seitenrahmen 4 an ihren getriebeseitigen Enden versteift werden müssen. Der obenseitig an den unterhalb der Wellen 22 endenden Kreiselachsen 21 adaptierte Verstellhebel 23 wird durch eine Schlitzöffnung 32 aus dem oberen Bereich 18 der Getriebe 7 so herausgeführt, daß er von außen leicht zugänglich ist. Die Länge der Schlitzöffnung 32 ist so festgelegt, daß der Verstellhebel 23 einen Schwenkbereich A überstreichen kann (Figur 5). Aufgrund dessen, daß der obere Bereich 18 der Getriebe 7 öldicht gegen den unteren Bereich 19 verschlossen ist, können durch die Schlitzöffnung 32 eindringende Partikel 33 nicht in den Bereich der Antriebs- und Lagerelemente 24-28 gelangen und dort zu verschmutzungsbedingten Störungen führen.

Um auch die Verschmutzung der Wellen 22 zu vermeiden, kann die Kreiselachse 21 an ihrem obenseitigen Ende eine Verlängerung 38 aufweisen, die die Wellen 22 umgreift und in vertikaler Richtung die deckelförmige Wand 14 des oberen Bereiches 18 durchsetzt und außerhalb des Getriebes 7 den Verstellhebel 23 lösbar aufnimmt. Zur Vereinfachung der Herstellbarkeit kann auch die Verlängerung 38 lösbar an der Kreiselachse 21 adaptiert werden.

Zur Vereinfachung der Betätigung der erfindungsgemäßen Laufradverstellung können die Verstellhebel 23 über einen Verstellmechanismus 2, der im einfachsten Fall durch Koppelstangen 36 gebildet wird lösbar miteinander verbunden sein, wobei die Koppelstangen 36 im Bereich der Achsen 5 ebenfalls um in Fahrtrichtung FR verlaufende Achsen 37 verschwenkbar miteinander verbunden sind. Die Auslösung eines derartigen Verschwenkmechanismus kann durch nicht näher dargestellte und aus dem Stand der Technik bekannte Verstellmittel wie beispielsweise Hubzylinder erfolgen.

### Bezugszeichenliste

- 1: Heuwerbungsmaschine
- 2: Verstellmechanismus
- 3: Rahmenmittelteil
- 4: Seitenrahmen
- 5: Achse
- 6: Rechkreisel
- 7: Getriebe
- 8: Laufrad
- 9: Längsträger
- 10: vertikale Achse
- 11: Aufsatteleinrichtung
- 12: Trägerfahrzeug
- 13: Grundkörper
- 14: deckelförmige Wand
- 15: horizontale Wand
- 16: vertikale Wand
- 17: V-Ring
- 18: oberer Getriebebereich
- 19: unterer Getriebebereich
- 20: Verlängerung
- 21: Kreiselachse
- 22: Welle
- 23: Verstellhebel
- 24: Kegelrad
- 25: Kegelrad
- 26: Lager
- 27: Lager
- 28: Lager
- 29: Dichtscheibe
- 30: Dichtscheibe
- 31: Wellendichtring
- 32: Schlitzöffnung
- 33: Partikel
- 34: Flanschfläche
- 35: Flanschfläche
- 36: Koppelstange
- 37: Achse
- 38: Verlängerung

- A: Schwenkbereich
- FR: Fahrtrichtung

## Patentansprüche

1. Landwirtschaftliche Arbeitsmaschine mit wenigstens einem als Rechkreisel (6) ausgeführten Arbeitsorgan, dessen Kreiselachse (21) untenseitig über wenigstens ein Laufrad (8) am Boden abgestützt wird und obenseitig in einem den Rechkreisel (6) antreibenden Getriebe (7) ausläuft, wobei das einstückig ausgeführte Getriebe (7) horizontal und vertikal verlaufende Wände (14-16) aufweist, die das Getriebe (7) in einen unteren, die zur Energieübertragung notwendigen Elemente (24, 25), deren Lagerung (26-28) und Abdichtelemente (29-31) aufnehmenden Bereich (19) und einen oberen das Gehäuse für die als Wellen (22) ausgeführten außerhalb des Getriebes (7) in profilförmigen Seitenrahmen (4) laufenden Energieübertragungsglieder bildenden Bereich (18) unterteilt, **dadurch gekennzeichnet,**
**dass** die horizontal und vertikal verlaufenden Wände (14 -16) des einstückigen Grundkörpers (13) einen Getriebeabschnitt (19) und einen Gehäuseabschnitt (18) bilden, und der Getriebeabschnitt (19) und der Gehäuseabschnitt (18) durch wenigstens ein ihnen zugeordnetes Abdichtelement (17) öldicht gegeneinander abgegrenzt sind, und wobei ein Verstellmechanismus (2,23) außerhalb des öldichten Getriebeabschnittes (19) angeordnet ist.

2. Landwirtschaftliche Arbeitsmaschine nach Anspruch 1,
**dadurch gekennzeichnet,**
**daß** die Kreiselachse (21) unterhalb der in den Seitenrahmen (4) laufenden Wellen (22) im oberen Bereich (18) des Getriebes (7) endet und an diesem Ende über einen Verstellhebel (23) verfügt, der über eine Schlitzöffnung (32) seitlich aus diesem oberen Bereich (18) des Getriebes (7) herausgeführt wird.

3. Landwirtschaftliche Arbeitsmaschine nach Anspruch 1,
**dadurch gekennzeichnet,**
**daß** die Kreiselachse (21) über eine obenseitige Verlängerung (38) verfügt, mit der sie die in den Seitenrahmen (4) laufenden Wellen (22) im oberen Bereich (18) des Getriebes (7) umgeht und in vertikaler Richtung aus dem oberen Bereich (18) des Getriebes (7) austritt und an diesem Ende über einen Verstellhebel (23) verfügt.

4. Landwirtschaftliche Arbeitsmaschine nach einem oder mehreren der vorhergehenden Ansprüche, **dadurch gekennzeichnet,**
**daß** die untere horizontal verlaufende Wand (15) des Getriebes (7) eine halsförmige Verlängerung (20) aufweist, die vom Verstellhebel (23)-tragenden Ende der Kreiselachse (21) durch-setzt wird.

5. Landwirtschaftliche Arbeitsmaschine nach einem oder mehreren der vorhergehenden Ansprüche, **dadurch gekennzeichnet,**
**daß** das Getriebe (7) vertikale Flanschflächen (34, 35) aufweist, mittels derer das Getriebe (7) ein- oder beidseitig an den Seitenrahmen (4) anflanschbar ist.

6. Landwirtschaftliche Arbeitsmaschine nach einem oder mehreren der vorhergehenden Ansprüche, **dadurch gekennzeichnet,**
**daß** das Abdichtelement (17) ein V-Ring oder Wellendichtring sein kann.

7. Landwirtschaftliche Arbeitsmaschine nach einem oder mehreren der vorhergehenden Ansprüche, **dadurch gekennzeichnet,**
**daß** die Verstellhebel (23) mehrerer Kreiselachsen (21) durch einen Verstellmechanismus (2) miteinander verbunden sein können.

8. Landwirtschaftliche Arbeitsmaschine nach Anspruch 5,
**dadurch gekennzeichnet,**
**daß** der Verstellmechanismus (2) im einfachsten Fall durch gelenkig miteinander verbundene Koppelstangen (36) gebildet wird.

## Claims

1. An agricultural working machine comprising at least one working member which is in the form of a rotary rake (6) and the rotor spindle (21) of which is supported at the lower end on the ground by way of at least one runner wheel (8) and terminates at the upper end in a transmission (7) for driving the rotary rake (6), wherein the transmission (7) which is in one piece has horizontally and vertically extending walls (14-16) which subdivide the transmission (7) into a lower region (19) which accommodates the elements (24, 25) necessary for power transmission, their bearing means (26-28) and sealing elements (29-31), and an upper region (18) which forms the housing for the power-transmission members which are in the form of shafts (22) and which run outside the transmission (7) in profiled side frame (4), **characterised in that** the horizontally and vertically extending walls (14-16) of the one-piece main body (13) form a transmission portion (19) and a housing portion (18) and the transmission portion (19) and the housing portion (18) are oil-tightly delimited relative to each other by at least one sealing element (17) associated with them, and wherein a displacement mechanism (2, 23) is arranged outside the oil-tight transmission portion (19).

2. An agricultural working machine according to claim 1 **characterised in that** the rotor spindle (21) ends below the shafts (22) running in the side frames (4) in the upper region (18) of the transmission (7) and at said end has a displacement lever (23) which is passed by way of a slot opening (32) laterally out of said upper region (18) of the transmission (7).

3. An agricultural working machine according to claim 1 **characterised in that** the rotor spindle (21) has an upper prolongation portion (38) with which it passes around the shafts (22) running in the side frames (4) in the upper region (18) of the transmission (7) and issues in a vertical direction out of the upper region (18) of the transmission (7) and at said end has a displacement lever (23).

4. An agricultural working machine according to one or more of the preceding claims **characterised in that** the lower horizontally extending wall (15) of the transmission (7) has a neck-shaped prolongation portion (20) through which passes the end of the rotor spindle (21), which carries the displacement lever (23).

5. An agricultural working machine according to one or more of the preceding claims **characterised in that** the transmission (7) has vertical flange surfaces (34, 35), by means of which the transmission (7) can be flange-mounted at one or both sides to the side frames (4).

6. An agricultural working machine according to one or more of the preceding claims **characterised in that** the sealing element (17) can be a V-ring or a shaft seal.

7. An agricultural working machine according to one or more of the preceding claims **characterised in that** the displacement levers (23) of a plurality of rotor spindles (21) can be connected together by a displacement mechanism (2).

8. An agricultural working machine according to claim 5 **characterised in that** in the simplest case the displacement mechanism (2) is formed by pivotably interconnected coupling bars (36).

## Revendications

1. Machine de travail agricole comportant au moins un organe de travail conformé en toupie de fanage (6), dont l'axe de toupie (21), côté inférieur, prend appui sur le sol par l'intermédiaire d'au moins une roue (8) et, côté supérieur, se termine dans une transmission (7) assurant l'entraînement de la toupie de fanage (6), la transmission (7) monobloc comportant des parois (14-16) horizontales et verticales qui divisent ladite transmission (7) en une zone inférieure (19) recevant les éléments (24, 25) nécessaires à la transmission de l'énergie, leurs paliers (26-28) ainsi que des éléments d'étanchéité (29-31), et en une zone supérieure (18) qui forme le carter des organes de transmission d'énergie conformés en arbres (22) disposés à l'extérieur de la transmission, dans des cadres latéraux (4) profilés, **caractérisée par le fait que** les parois (14-16) horizontales et verticales du corps de base (13) monobloc définissent une partie transmission (19) et une partie carter (18) et que la partie transmission (19) et la partie carter (18) sont séparées l'une de l'autre de manière étanche à l'huile par au moins un élément d'étanchéité (17) associé, un mécanisme de réglage (23) étant disposé à l'extérieur de la partie transmission (19) étanche à l'huile.

2. Machine de travail agricole selon la revendication 1, **caractérisée par le fait que** l'axe de toupie (21) se termine dans la zone supérieure (18) de la transmission (7), en-dessous des arbres (22) disposés dans les cadres latéraux (4), et porte à cette extrémité un levier de réglage (23) qui sort latéralement de ladite zone supérieure (18) de la transmission (7) à travers une ouverture en forme de fente.

3. Machine de travail agricole selon la revendication 1, **caractérisée par le fait que** l'axe de toupie (21) présente une pièce de rallonge (38) supérieure, grâce à laquelle il contourne les arbres (22) logés dans les cadres latéraux (4) dans la zone supérieure (18) de la transmission (7) et sort de ladite zone supérieure (18) de ladite transmission (7) dans la direction verticale, et porte à cette extrémité un levier de réglage (23).

4. Machine de travail agricole selon une ou plusieurs des revendications précédentes, **caractérisée par le fait que** la paroi (15) inférieure horizontale de la transmission (7) présente un prolongement en forme de col (20) qui est traversé par l'extrémité de l'axe de toupie (21) portant le levier de réglage (23).

5. Machine de travail agricole selon une ou plusieurs des revendications précédentes, **caractérisée par le fait que** la transmission (7) présente des surfaces à brides (34, 35) verticales par l'intermédiaire desquelles la transmission (7) peut être reliée d'un côté ou des deux côtés aux cadres latéraux (4).

6. Machine de travail agricole selon une ou plusieurs des revendications précédentes, **caractérisée par le fait que** élément d'étanchéité (17) est une bague en V ou un joint d'arbre.

7. Machine de travail agricole selon une ou plusieurs des revendications précédentes, **caractérisée par le fait que** les leviers de réglage (23) de plusieurs axes de toupies (21) peuvent être reliés entre eux par un mécanisme de réglage (2).

8. Machine de travail agricole selon la revendication 5, **caractérisée par le fait que** le mécanisme de réglage (2) , dans le cas le plus simple est formé de tiges de couplage (36) reliées entre elles de manière articulée.
